# EUROPÄISCHE PATENTSCHRIFT

(11) **EP 2 203 504 B1**
(45) Veröffentlichungstag und Bekanntmachung des Hinweises auf die Patenterteilung: **16.01.2013**
(21) Anmeldenummer: 08840336.5
(22) Anmeldetag: 18.10.2008
(51) Int. Cl.: C08J 7/04

(54) **ZUSAMMENSETZUNG MIT UV-SCHUTZ**
COMPOSITION WITH UV PROTECTION
COMPOSITION AVEC PROTECTION ANTI-UV

(30) Priorität: 20.10.2007 DE 102007050192
(43) Veröffentlichungstag der Anmeldung: 07.07.2010
(73) Patentinhaber: Bayer MaterialScience AG, 51368 Leverkusen (DE)
(72) Erfinder: STOLLWERCK, Gunther, 47802 Krefeld (DE); MALEIKA, Robert, 40231 Düsseldorf (DE); BUCKEL, Frank, 47906 Kempen (DE); CAPELLEN, Peter, 47803 Krefeld (DE)
(86) Internationale Anmeldenummer: PCT/EP2008/008834
(87) Internationale Veröffentlichungsnummer: WO 2009/049904

(56) Entgegenhaltungen:
- US-A- 5 391 795
- US-A1- 2007 104 956

## Beschreibung

Die vorliegende Erfindung begriff eine Zusammensetzung enthaltend
a) 100.000 Gewichtsteile einer Primerzusammensetzung, geeignet als Haftvermittler zwischen einem thermoplastischen Substrat und einem siloxanbasierten Decklack und enthaltend (a1) Bindermaterial, Lösemittel (a2), und Dibenzoylresorcin als UV-Absorber (a3);
b) 0 bis 900.000 Gewichtsteile eines Lösemittels, und
c) 1 bis 3.000 Gewichtsteile einer Verbindung der Formel (I): 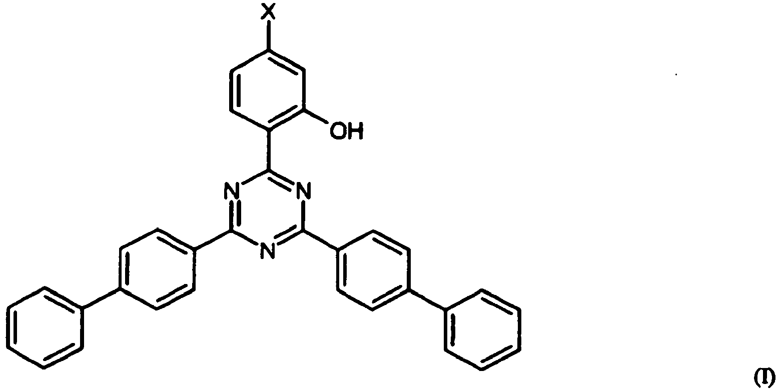
wobei
X = OR⁶, OCH₂CH₂OR⁶, OCH₂CH(OH)CH₂OR⁶ oder OCH(R⁷)COOR⁸, worin
R⁶ = verzweigtes oder unverzweigtes C₁-C₁₃-Akyl, C₂-C₂₀-Alkenyl, C₆-C₁₂-Aryl oder -CO-C₁-C₁₈-Alkyl,
R⁷ = H oder verzweigtes oder unverzweigtes C₁-C₈-Alkyl, und
**R⁸** = C₁-C₁₂-Alkyl; C₂-C₁₂-Alkenyl oder C₅-C₆-Cycloalkyl sind,
wobei die Zusammensetzung eine Viskosität von 40sec bis 140sec gemessen nach DIN EN ISO 2431 bei 23°C und einem 2mm Becher hat.

Weiterhin betrifft sie ein Verfahren zur Verbesserung der Verarbeitbarkeit von sogenannten Dickprimern (dabei handelt es sich um haftvermittelnde Lacke (sogenannte Primer) zumeist auf Basis organischer Bindermaterialien mit Schichtdicken gemessen nach Härtung des Lackes von ≥ µm), ohne Einbußen an den funktionalen Eigenschaften des Dickprimers hinsichtlich UV-Schutzwirkung und Haftungsvermittlung zwischen einem Substrat und einem Decklack. Weiterhin betrifft es eine Lackformulierung bestehend aus der Primerzusammensetzung eines Dickprimers plus speziellen festen und flüssigen Zusatzstoffen, in Form eines speziellen UV-Absorbers und geeigneter Lösemittel, sowie weiterhin die mit dieser Lackformulierung hergestellten mehrschichtigen Erzeugnisse. Diese mehrschichtigen Erzeugnisse haben eine erste Schicht bestehend aus einem Kunststoffsubstrat, eine zweite Schicht bestehend aus der gehärteten Primerschicht basierend auf der erfindungsgemäßen Lackformulierung hergestellt über das erfindungsgemäße Verfahren und einer dritten Schicht bestehend aus einem gehärteten Decklack.

### Stand der Technik

Organische Bindermaterialien, die sowohl eine gute Haftung zu Polycarbonat-Oberflächen, wie auch zu siloxanbasierten Decklacken besitzen, sind beispielsweise aus US 5,041,313 sowie US 5,391,795 und den dort zitierten Patenten bekannt und werden als Haftvermittler bei der Beschichtung von Polycarbonat eingesetzt. Zusätzlich zu der Haftvermittlung können diese Primerlacke auch noch einen UV-Absorber enthalten wie in US 5,041,313 und US 5,391,795 erwähnt und so einen Beitrag zur Witterungsstabilität des beschichteten Bauteils leisten.

Einen Überblick über die Integration einer UV-Schutzfunktion in ein kratzfestbeschichtetes Polycarbonatsubstrat gibt US 4,410,594, wobei die favorisierte Variante imprägnieren des Polycarbonatteils mit einem UV-Absorber und anschließendes Beschichten erst mit einem Haftprimer und danach mit einen Decklack zwei gravierende Nachteile hat. Erstens ist das Imprägnieren ein weiterer Verfahrensschritt in einem sowieso schon mehrstufigen Herstellprozess und deshalb ökonomisch ineffizient. Zweitens hat diese Methode den Nachteil, dass das für PC schädliche UV-Licht nicht vor dem Erreichen der PC Oberfläche durch Primer und / oder Decklack herausgefiltert wird, sondern auf die PC Oberfläche trifft und erst dort und aufgrund der Konkurrenz zum ebenfalls absorbierenden PC auch nur teilweise von eindiffundierten UV-Absorber absorbiert wird. Dementsprechend ist die UV-Schutzwirkung bei dieser Variante geringer verglichen mit der Verwendung des UV-Absorbers in Primer und / oder Decklack. Bei der ebenfalls in US 4,410,594 offenbarten ausschließlichen Verwendung des UV-Absorbers im Decklack ist die Schutzwirkung durch die begrenzte Kompatibilität von organischen UV-Absorbern in dem siloxanbasierten Decklack gering. Dementsprechend ist eine zusätzliche UV-Schutzwirkung durch zusätzliche oder alleinige Verwendung eines UV-Absorbers im Primer sinnvoll. US 6350521 beschreibt einen Primer, der sowohl unsilylierte als auch silylierte Dibenzoylresorcinderivate enthält.

Bei der Verwendung eines UV-Absorbers im Primer wird eine hohe UV-Extinktion und damit gute UV-Schutzfunktion über eine hohe Schichtdicke erreicht. Diese hohe Schichtdicke von so genannten Dickprimern wird wiederum durch einen hohen Feststoffgehalt des Lackes erreicht, der dafür sorgt, dass beim Auftrag des Lackes auf das Bauteil eine große Menge des zu härtenden bzw. zu trocknenden Lackmaterials nach dem Ablüften verbleibt. Dieser hohe Feststoffgehalt wiederum ist mit einer hohen Viskosität und damit schwierigen Verarbeitung verbunden.

Diese schwierigere Verarbeitung äußert sich wie folgt.
(a) Eine hohe Viskosität führt zu hohen Schichtdickenunterschieden beim Fluten oder Tauchen der Bauteile entlang der Flut- oder Tauchrichtung, ein so genannter Schichtdickenkeil. Dies tritt in besonderem Maße bei großen und kompliziert geformten 3-D Teilen auf. Da das Eigenschaftsniveau eines Lackes nur in einem relative engen Schichtdickenfenster annähernd gleich ist, führen diese großen Schichtdickenunterschiede zu Eigenschaftseinbußen des Bauteils, wie z.B. reduzierte Bewitterungsstabilität oder erhöhte Rissanfälligkeit des über den Dickprimer zu beschichtenden Decklacks.
(b) Weiterhin ist das Ablaufverhalten eines Lackes beim Beschichten eines Bauteils an der Abtropfkante durch eine hohe Viskosität deutlich ungünstiger als bei niedrigerer Viskosität, was zu Lacknasenbildung bzw. sogar zu Fadenbildung an der unteren Kante, der Abtropfkante, des Bauteil führen kann.
(c) Dreidimensionale Bauteile mit großer Krümmung lassen sich mit hochviskosen Dickprimern gar nicht beschichten. Hier muss normalerweise die Viskosität des Primers reduziert werden, um das Bauteil überhaupt in guter optischer Qualität beschichten zu können. Das geschieht durch Reduktion des Feststoffgehalts in der Lacklösung, was eine Reduktion der Trockenschichtdicke zur Folge hat. Da die UV-Absorption und damit die UV-Sehutzfunktion schichtdickenabhängig ist, reicht der UV-Schutz in der reduzierten Schichtdicke dann nicht aus und es kommt zu Eigenschaftseinbußen.

Aus der EP-A 672732 ist ein Schichtaufbau aus Polycarbonat, Primer und Decklackschicht bekannt, worin die Primerschicht einen UV-Stabilisator auf Basis von Resorcinderivaten enthält. Diese besitzen jedoch nur eine eingeschränkte Löslichkeit, die dazu führt, dass die Primerschicht getrübt wird, wenn man versucht, die Konzentration dieser UV-Stabilisatoren weiter zu erhöhen, um damit die Extinktion im UV-Bereich ausreichend zu erhöhen. Eine UV-Stabilisierung für ein transparentes Substrat ist daher nicht in zufriedenstellender Weise möglich. Auch führt der Zusatz großer Mengen UV-Stabilisator auf Basis von Resorcinderivaten zu einem Viskositätsanstieg der Primerzusammensetzungen, die ihre Verarbeitung erschwert. Auch andere UV-Stabilisatoren, wie solchen auf Triazinbasis, weisen eine ähnlich geringe Löslichkeit auf, die einer Erhöhung der Konzentration zur Erhöhung der Extinktion im UV-Bereich entgegensteht.

### Aufgabenstellung:

Ausgehend vom Stand der Technik war eine Aufgabe die Bereitstellung eines UV-Schutz Primers mit guter UV-Schutz Wirkung bei guter, d.h. gleicher oder besserer Verarbeitbarkeit.

### Lösung des Problems:

Die Aufgabe wird gelöst durch eine Zusammensetzung enthaltend
a) 100.000 Gewichtsteile einer Primeizusammensetzung, geeignet als Haftvermittler zwischen einem thermoplastischen Substrat und einem siloxanbasierten Decklack und enthaltend (a1) Bindermaterial, Lösemittel (a2), und Dibenzoylresorcin als UV-Absorber (a3);
b) 0 bis 900.000 Gewichtsteile eines Lösemittels, und
c) 1 bis 3.000 Gewichtsteile einer Verbindung der Formel (I): 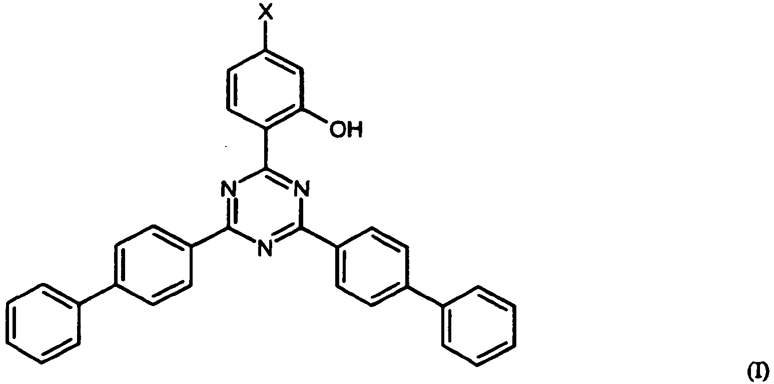
wobei
X = OR⁶, OCH₂CH₂OR⁶, OCH₂CH(OH)CH₂OR⁶ oder OCH(R⁷)COOR⁸, worin
R⁶ = verzweigtes oder unverzweigtes C₁-C₁₃-Alkyl, C₂-C₂₀-Alkenyl, C₆-C₁₂-Aryl oder -CO-C₁-C₁₈-Alkyl,
R⁷ = H oder verzweigtes oder unverzweigtes C₁-C₈-Alkyl, und
R⁸ = C₁-C₁₂-Alkyl; C₂-C₁₂-Alkenyl oder C₅-C₆-Cycloalkyl sind,
wobei die Zusammensetzung eine Viskosität von 40sec bis 140sec gemessen nach DIN EN ISO 2431 bei 23°C und einem 2mm Becher hat.

Überraschenderweise wurde gefunden, dass mit den erfindungsgemäßen Zusammensetzungen sich Kunststoffteile verbessert beschichten lassen, was sich in (a) einer engeren Schichtdickenverteilung auf dem Bauteil, (b) einem sauberen Ablaufen des Lackes an der Abtropfkante des Bauteils, (c) einer besseren Beschichtbarkeit auch komplizierter 3-D Bauteile im Sinne einer homogeneren Verteilung des Lackes über dem Bauteil bemerkbar macht, und zwar ohne Einbußen beim UV-Schutz, nämlich einer vergleichbaren Extinktion bei 340 nm trotz niedrigerer Schichtdicke.

Gegenstand der Erfindung ist daher auch ein mehrschichtiges Erzeugnis, das durch Härten der oben beschriebenen erfindungsgemäßen Zusammensetzung erhalten wird. Der Schichtaufbau, umfasst:
i) ein thermoplastisches Substrat, mit einer darauf befindlichen
ii) Primerschicht,
dadurch gekennzeichnet, dass die Primerschicht durch Härtung der Zusammensetzung gemäß Anspruch 1 erhalten wird.

Weiterhin wurde überraschend gefunden, dass die Verwendung einer Kombination von UV Absorbern der Hydroybenzophenon-Klasse, insbesondere Recorcin-basierte UV-Stabilisatoren der allgemeinen Formel (II) mit Triazinbasierten UV-Stabilisatoren der Formel (I) insbesondere in Primerzusammensetzungen für transparente thermoplastische Substrate, wie insbesondere solchen aus Polycarbonaten dazu führt, dass ein ausreichender UV-Schutz für die transparenten thermoplastischen Schichtaufbauten erreicht wird, ohne dass es zur Trübung der Primerschicht, mithin des gesamten transparenten Schichtaufbaus kommt.

### Beschreibung der Erfindung:

Der Ausdruck "Zusammensetzung" bedeutet im Rahmen der vorliegenden Erfindung ein Gemisch von Einzelkomponenten. Diese können bei oder nach der Mischung miteinander reagieren oder auch nicht. Makroskopisch ist eine Zusammensetzung im wesentlichen homogen.

Der Ausdruck "Primerzusammensetzung" (Komponente (a)), bedeutet im Rahmen der vorliegenden Erfindung die typischen und hier geeigneten Dickprimerformulierungen, bestehend aus einem (a1) Bindermaterial in einem Lösemittel (a2), sowie Dibenzoylresorcin als UV-Absorber (a3) und eventuell weiteren (a4) Additiven oder Stabilisatoren wie Antioxidantien, gehinderte Amine oder Farbstoffe oder anorganische Füllstoffe.

Besonders geeignet und damit bevorzugt ist Polyacrylat als Bindermaterial, wobei sowohl Polyacrylattypen in Frage kommen, die beim Härten der Lackformulierung (a) nur Trocknen ohne eine chemische Reaktion einzugehen, wie auch Typen, die beim Härten über eine chemische Reaktion noch quervernetzt werden. Als Lösemittel (a2) geeignet sind organische Lösemittel wie Alkane, Alkohole, Ether, Ester oder Ketone, wobei auch Emulsionen von Polyacrylat in Wasser bzw. wasserbasierten Lösemittelgemischen prinzipiell in Frage kommen. Diese Primerformulierungen sind prinzipiell bekannt und beispielsweise in US 5391795, US 5041313 und US 4410594 im Detail offenbart. Beispielsweise ist SHP470 von Momentive Performance Materials Inc. ein Haftvermittler auf Polymethylmethacrylatbasis unter anderem mit 1-Methoxy-2-propanol und Diacetonalkohol als Lösemittel und Dibenzoylresorcin als UV-Absorber. Der applizierfertig verdünnte SHP 470 (Feststoffgehalt ca. 6 Gew.-%) hat eine Viskosität von > 90 sec gemessen nach DIN EN ISO 2431 bei 23°C und einem 2mm Becher. Dieser Primer wird für die Haftvermittlung zwischen Polycarbonatsubstrat und Polysiloxandecklacken, hier bevorzugt dem AS4700 von Momentive Performance Materials Inc. verwendet. US 6350521 beschreibt einen Primer, der sowohl unsilylierte, als auch silylierte Dibenzoylresorcinderivate enthält.

Der Ausdruck "geeignet als Haftvermittler zwischen einem thermoplastischen Substrat und einem siloxanbasierten Decklack" bedeutet im Rahmen der vorliegenden Erfindung, dass der Primer die Haftung eines siloxanbasierten Decklacks auf einem thermoplastischen Substrat verbessert.

Die Komponente (b) sind Lösemittel, die in dem Maße mit einer ersten Schicht, dem Kunststoffsubstrat verträglich sein müssen, sowie in dem Maße ein Dispergieren, Applizieren und Ablüften der Zusammensetzung ermöglichen müssen, dass nach der Härtung der Zusammensetzung zur einer zweiten Schicht ein mehrschichtiges Erzeugnis mit hoher Transparenz und geringer Trübung erhalten wird. Hier kann es sich beispielsweise und vorzugsweise um Alkane, Alkohole, Ether, Ester, oder Ketone handeln. Unter Lösemittel werden hierbei auch oder Lösemittelgemische veratanden. Besonders bevorzugt werden Alkohole (mit Ausnahme von Methanol), Essigsäureethylester und Butanon eingesetzt. Ganz besonders bevorzugt sind Lösemittel oder Lösemittelgemische ausgewählt aus mindestens einem der Gruppe bestehend aus Diacetonalkohol (CH₃)₂C(OH)CH₂C(=O)CH₃, Essigsäureethylester, Methoxypropanol und Butanon.

Die Komponente (c) sind Derivate des Biphenyltriazins der nachfolgenden Formel (I): 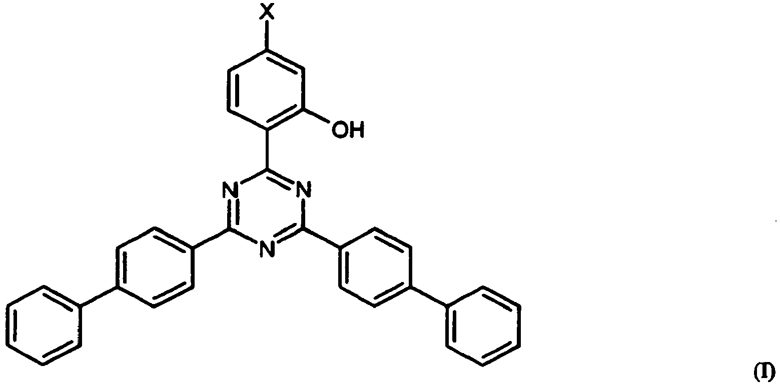 wobei
X = OR⁶, OCH₂CH₂OR⁶, OCH₂CH(OH)CH₂OR⁶ oder OCH(R⁷)COOR⁸, bevorzugt OCH(R⁷)COOR⁸,
R⁶ = verzweigtes oder unverzweigtes C₁-C₁₃-Alkyl, C₂-C₂₀-Alkenyl, C₆-C₁₂-Aryl oder -CO-C₁-C₁₈-Alkyl,
R⁷ = H oder verzweigtes oder unverzweigtes C₁-C₈-Alkyl, bevorzugt CH₃ und
R⁸ = C₁-C₁₂-Alkyl; C₂-C₁₂-Alkenyl oder C₅-C₆-Cycloalkyl, bevorzugt C₈H₁₇ sind.

Besonders bevorzugt wird als Komponente c) ein UV-Absorber gemäß der Formel (I) mit X = OCH(R⁷)COCR⁸, R⁷ = CH₃ und R⁸ = C₈H₁₇, insbesondere steht R⁸ für iso-Octyl d.h. 2-[2-Hydroxy-4-[(octyloxycarbonyl)ethylidenoxy]phenyl-4,6-di(4-phenyl)phenyl-1,3,5-triazin eingesetzt. Die Verbindung hat die CAS No. 204848-45-3 und ist erhältlich von Ciba Speciality Chemicals unter dem Namen Tinuvin 479 (im folgenden auch CGL 479).

Die biphenylsubstituierten Triazine der allgemeinen Formel (I) und ihre Herstellung sind aus WO-A 96/28431; DE-A 197 39 797; WO-A 00/66675; US 6,225,384; US 6,255,483; EP-A 1 308 084 und DE-A 101 35 795 bekannt.

In einer bevorzugten Ausführungsform weisen die UV-Absorber eine hohe UV-Absorption im Bereich der größten Empfindlichkeit der ersten Schicht auf, besonders bevorzugt besitzen die UV-Absorber ein UV-Absorptionsmaximum zwischen 300-340 nm.

In einer weiteren bevorzugten Ausführungsform werden die UV-Absorber der Formel (I) bevorzugt mit Dibenzoylresorcin als UV-Absorber (a3) eingesetzt.

Bevorzugte Dibenzoylresorcine sind Verbindungen der Formel (IIa) und/oder (IIb) 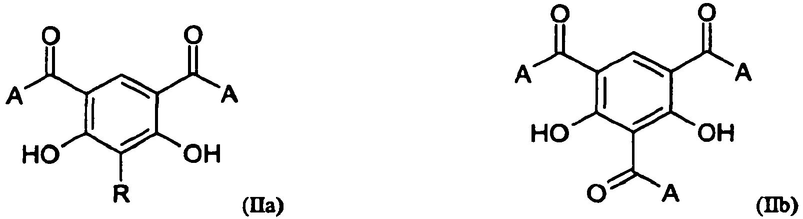 worin jedes A unabhängig ein substituierter oder unsubstituierter monocyclischer oder polycyclischer aromatischer Rest ist und der substitutierte monocyclische oder polycyclische aromatische Rest Substituenten hat, die ausgewählt sind aus der Gruppe bestehend aus Wasserstoff, Halogenen, Alkoxygruppen, C₁₋₈ Alkylgruppen und Hydroxygruppen und R Wasserstoff oder eine lineare oder verzweigte aliphatische Kette mit weniger als 10 Kohlenstoffatomen ist.

A ist unabhängig voneinander bevorzugt Phenyl oder 4-tert.-Butylphenyl.

R ist bevorzugt H, Propyl oder 3-Triethoxysilylpropyl.

Daraus ergibt sich also als bevorzugte UV-Absorber der Formeln (IIa und IIb) 4,6-Dibenzoylresorcin, 4,6-Di-(4-tert.-butylbenzoyl)resorcin, 4,6-Dibenzoyl-2-propylresorcin, 2,4,6-Tribenzoylresorcin und 4,6-Dibenzoyl-2-(3-Triethoxysilylpropyl)resorcin.

UV-Absorber der Formel (I) und UV Absorber a3 werden bevorzugt in einem Gewichtsverhältnis von 1 zu 0,01 bis 100, bevorzugt 1 zu 0,05 bis 50 und besonders bevorzugt 1 zu 0,1 bis 20 bezogen auf die gesamte UV-Absorber Menge eingesetzt.

Bei denen im Rahmen dieser Erfindung geeigneten Kunststoffsubstraten für die erste Schicht der mehrschichtigen Erzeugnisse handelt es sich um Polycarbonat, Polyestercarbonat, Polyester (wie beispielsweise Polyalkylenterephthalat), Polyphenylenether, Pfropfcopolymere (wie beispielsweise ABS) und deren Mischungen.

Die erste Schicht ist bevorzugt Polycarbonat, insbesondere Homopolycarbonat, Copolycarbonat und/oder thermoplastisches Polyestercarbonat.

Bei der im Rahmen dieser Erfindung geeigneten Primerschichten für die zweite Schicht der mehrschichtigen Erzeugnisse, handelt es sich um die aus der erfindungsgemäßen Lackformulierung durch Härtung entstandenen Schichten. Wobei der Begriff Härtung hier sowohl eine chemische Vernetzung wie auch eine Trocknung ohne Reaktion je nach verwendetem Primertyp beinhaltet.

Das spezifische Herstellverfahren für die erfindungsgemäßen Lackformulierungen ist natürlich abhängig von dem genauen Feststoff- und UV-Absorbergehalt bzw. der Extinktion bei gegebener Schichtdicke des verwendeten kommerziellen Dickprimers. Allgemein angewandt werden kann die hier beschriebene Erfindung jedoch im Rahmen der folgenden Grenzen. Bevorzugt ist eine Verdünnung der Komponente (a) auf 10 bis 100% mit der Komponente (b), d.h. das Gewicht der Ausgangsformulierung (Komponente (a)) beträgt 10 bis 100% bezogen auf das Gewicht der Formulierung nach Verdünnung (Komponente (a) plus Komponente (b)), besonders bevorzugt ist eine Verdünnung auf 20 bis 90%. Bevorzugt ist einen UV-Absorberzugabe (Komponente (c)) von 0,01 Gew.-% bis 30 Gew.-% bezogen auf den Feststoffgehalt der Formulierung, besonders bevorzugt sind 0,1 bis 15 Gew.-%, dabei erfolgt bevorzugt eine hohe UV-Absorberzugabe, wenn auch stark verdünnt wird. Dabei kann die Zugabe der einzelnen Komponenten nacheinander oder zeitgleich erfolgen, bevorzug ist jedoch ein Zugabe von Komponente (c), gelöst zumindest in einem Teil von Komponente (b), zu Komponente (a) und eventuell dem Rest von Komponente (b).

Beispielhaft aber nicht einschränkend sei hier das allgemeine Herstellverfahren auf Basis des kommerziell erhältlichen SHP 470 mit einem Feststoffgehalt von ca. 10% und einer Extinktion von etwa 1,2 bei 340nm und einer Schichtdicke von 2µm von der Firma Momentive Performance Materials Inc., Wilton, CT USA, beschrieben. SHP470 ist ein Haftvermittler auf Polymethylmethacrylatbasis unter anderem mit 1-Methoxy-2-propanol und Diacetonalkohol als Lösemittel und Dibenzoylresorcin als UV-Absorber. Der applizierfertig verdünnte SHP 470 (Feststoffgehalt ca. 6 Gew.-%) hat eine Viskosität von > 90 sec gemessen nach DIN EN ISO 2431 bei 23°C und einem 2mm Becher. Dieser Primer wird für die Haftvermittlung zwischen Polycarbonatsubstrat und Polysiloxandecklacken, hier bevorzugt dem AS4700 von Momentive Performance Materials Inc. verwendet. Der SHP470 (Komponente (a)) wird auf 20 bis 95%, besonders bevorzugt auf 25 bis 90%, bevorzugt mit Alkoholen (Komponente (b)), besonders bevorzugt mit Diacetonalkohol, Methoxypropanol oder Mischungen davon herunter verdünnt, dies ergibt dann einen Feststoffgehalt von ca. 2 bis 9,5 Gew.-%, bevorzugt 2,5 bis 9 Gew.-%, und mit 0,01 bis 15 Gew.-%, bevorzugt 0,1% bis 10 Gew.-%, besonders bevorzugt 1% bis 7 Gew.-% . (bezogen auf den Feststoffgehalt der Komponente a) eines Triazin UV-Absorbers (Komponente (c)), bevorzugt eines Biphenyltriazin UV-Absorbers der allgemeinen Formel (I), besonders bevorzugt des UV-Absorber CGL479) versetzt und währenddessen und/oder anschließend auf geeignete Weise homogenisiert. Auch hier ist es vorteilhaft die Komponente (c) in Diacetonalkohol, Methoxypropanol oder Mischungen daraus zu lösen und so zu dem SHP470 zuzugeben. Das ideale Verdünnungsverhältnis ist abhängig von der Dimension und Geometrie des Bauteils sowie der Lackapplikation und sollte im Einzelfall angepasst werden. Vorzugsweise ist das Verhältnis 5 Gew.-% CGL 479 bezogen auf den Feststoffgehalt von SHP470 von ca. 6 Gew.-% Feststoffgehalt, wobei man bei 1µm Schichtdicke eine Extinktion von ca. 1,2 erreicht. Dieses ist bei SHP470 ohne zusätzlichen UV-Absorber erst bei 2µm der Fall.

Bei der im Rahmen dieser Erfindung geeigneten Deckschichten für die dritte Schicht der mehrschichtigen Erzeugnisse, handelt es sich um die aus geeigneten Decklacken durch Härtung entstandenen Schichten.

Geeignete Decklacke sind beispielsweise Formulierungen von kratz- bzw. abriebsbeständigen Lacken beispielsweise aber nicht ausschließlich Polysiloxanlacke, wie sie beispielsweise aus US 4,3730,61, US 4,410,594, US 5,041,313, oder auch aus US 5,391,795 bekannt sind, des-weiteren seien hier Silikatbeschichtungen (Wasserglas), und nanopartikelhaltige Formulierung genannt, die auf die zweite Schicht, den Primer aufgebracht und anschließend zu einem gut haftenden mehrschichtigen Erzeugnis ausgehärtet werden können.

Gegenstand der Erfindung ist auch ein Verfahren zur Herstellung eines mehrschichtigen Erzeugnisses, wobei
(i) in einem ersten Schritt die zweite Schicht in Form der erfindungsgemäßen Lackformulierung aufgetragen wird auf die erste Schicht, bei der es sich vorzugsweise um ein aus dem thermoplastischen Polymer, besonders bevorzugt Polycarbonat, mittels Spritzgießen oder Extrudieren erzeugtes Kunststoffformteil beliebiger Gestalt handelt, und
(ii) in einem zweiten Schritt die Primerlackformulierung der zweiten Schicht gehärtet wird, wobei der Begriff Härtung hier sowohl eine chemische Vernetzung wie auch eine Trocknung ohne Reaktion je nach verwendetem Primertyp beinhaltet, und
(iii) in einem dritten Schritt die dritte Schicht in Form der Decklackformulierung auf die Oberfläche der zweiten Schicht aufgetragen wird, und
(iv) in einem vierten Schritt die Docklackformulierung der dritten Schicht gehärtet wird.

Vorzugsweise wird im ersten Schritt (i) die Lackformulierung auf die Oberfläche der ersten Schicht durch Fluten, Tauchen, Sprühen, Aufwalzen, Aufschleudern oder ein anderes geeignetes Verfahren aufgebracht und anschließend im zweiten Schritt bei Raumtemperatur und / oder erhöhter Temperatur (vorzugsweise bei 20 - 200°C, besonders bevorzugt bei 40 - 130°C) gehärtet. Die Oberfläche der ersten Schicht kann durch Reinigung oder Aktivierung vorbehandelt sein. Das Aufbringen und Härten (Schritt (iii) und (iv)) ist abhängig vom verwendeten Decklacktyp.

Weitere Gegenstände der Erfindung sind die Herstellung der mehrschichtigen Erzeugnisse sowie die aus den mehrschichtigen Erzeugnissen aufgebauten Erzeugnisse. Ebenfalls Gegenstand der vorliegenden Erfindung ist die Verwendung besagter mehrschichtiger Erzeugnisse insbesondere für Außenanwendungen mit dauerhaft hohen Anforderungen hinsichtlich des visuellen Eindrucks, wie beispielsweise der Verscheibung. Beispielsweise stellt dieses mehrschichtige Erzeugnis eine Verscheibung wie zum Beispiel Architekturverscheibungen, Automobilverscheibung, Scheinwerferscheiben, Brillengläser oder Helmvisiere dar.

### Beispiele

### Allgemein

Im folgenden beziehen sich die Mengen, wenn nicht anders genannt, auf Gew-%.

Alle Lösemittel wurden als techn. Ware bezogen und nicht getrocknet eingesetzt.

### Feststoffgehaltsbestimmung (Methode A):

Der Feststoffgehalt der Lacke wurde mit Hilfe des Feststofftesters Sartorius MA40 bestimmt, wobei eine gewogene Lackprobe so lange bei 140°C eingedampft wurde, bis Massekonstanz erreicht wurde. Der Feststoffgehalt ergibt sich dann in Prozent aus dem Quotienten Masse nach zu Masse vor dem Eindampfen. Der Feststoffgehalt des Lackes nach Härten des Lackes beträgt hierbei im einfachsten Fall Lackgewicht abzüglich Lösungsmittelgewicht.

### Viskositätsbestimmung, (Methode B):

Die Viskositäten der Lacklösungen wurden in Anlehnung an DIN EN ISO 2431 mit Auslaufbechern der Firma Erichsen, wobei der Auslaufbecher eine Düse von Ø 4 mm bzw. Ø 2 mm aufweist, in Sekunden bei 23°C bestimmt.

### Schichtdickenbestimmung (Methode C):

Die Schichtdicke der gehärteten Lacke wird über Weißlichtinterferenz mit Hilfes des Messgerätes Eta SD30 der Firma Eta Optik GmbH, Deutschland bestimmt.

### Extinktionsbestimmung (Methode D):

Die Extinktion des Primer nach Applikation auf ein Polycarbonatsubstrat und anschließender Härtung wurde mit Hilfe eines Cary 50 UV-Vis Spektrophotometers von Varian Inc., USA bestimmt, wobei eine unbeschichtetes, aber sonst identisches Polycarbonatsubstrat als Hintergrundspektrum verwendet wurde.

### Beispiel 1 (Vergleich)

Von dem kommerziell erhältlichen Dickprimer SHP 470 (Momentive Performance Materials Inc. Wilton, CT USA), wurde nach Methode A ein Feststoffgehalt von 9,96% bestimmt.

Die Viskosität dieser Lacklösung wurde mit einem Auslaufbecher Düse Ø 4 mm nach Methode B bestimmt, wobei 53,41 s ermittelt wurden. Die Bestimmung mit einer Düse mit 2 mm Durchmesser war nicht möglich, da die Lacklösung zähfließend war.

Dieser Lack wurde im Flutverfahren auf eine Polycarbonatplatte (spritzgegossenen Polycarbonat (PC)-Platten in optischer Qualität aus Makcolon^{®} 2808 (Bayer MaterialScience AG; mittelviskoses Bisphenol A-Polycarbonat, MFR 10g/10min nach ISO 1133 bei 300°C und 1,2kg, ohne UV-Stabilisierung) der Größe 10,5 x 15 x 0,32 cm) aufgebracht, 30min abgelüftet und 15min bei 125°C gehärtet.

Dabei wurde in Flutrichtung von Anflutkante bis Abtropfkante bereits nach 3cm (also noch im Anflutbereich) auf der Platte eine Schichtdicke nach Methode C von 4,4µm ermittelt, die bis 3cm vor der Abtropfkante (also bei 12cm) auf 8,8µm ansteigt.

Da der Lack gemäß Spezifikation des Herstellers sein ideales Eigenschaftsprofil in einem Schichtdickenfenster von 2 bis 4µm besitzt, muss er hier - bei dem verwendeten Lackierverfahren und dem zu lackierenden Bauteil - verdünnt werden, um eine niedrigere spezifikationsgerechte Schichtdicke auf dem Bauteil zu erzielen. Außerhalb der spezifikationsgerechten Schichtdicke, also unterhalb von 2µm bzw. oberhalb von 4µm ist eine mangelnde Witterungsbeständigkeit zu beobachten. Diese mangelnde Witterungsstabilität äußert sich darin, dass diese Proben, verglichen mit Proben deren Schichtdicke sich innerhalb der 2 bis 4µm Grenze befinden, signifikant früher durch Delamination bzw. Rissbildung bei der Bewitterung ausfallen.

### Beispiel 2

Es wurde eine Stammlacklösung aus dem kommerziell erhältlichen Dickprimer SHP 470 (Feststoffgehalt 9,90% & Viskosität 4 mm Becher 46,25 s (Bestimmung siehe Methode A & B) und einem 1:1 Lösemittelgemisch aus Diacetonalkohol und 1-Methoxy-2-propanol hergestellt, indem 300,0g SHP 470 (9,9 Gew-%ig) vorgelegt und unter Rühren mit je 97,5g Diacetonalkohol und 1-Methoxy-2-propanol versetzt wurde. Die erhaltene Lösung wird Stammlösung 2A genannt.

Zu 100g dieser Stammlösung 2A wurde unter Rühren 0,12g CGL 479 zugegeben, wodurch Lacklösung 2B mit 2Gew.-% CGL 479 bezogen auf den experimentell ermittelten Feststoffgehalt von 2A (Bestimmung siehe Methode A) mit 5,95% erhalten wurde.

Zu weiteren 100g Stammlösung 2A wurden unter Rühren 0,30g CGL 479 zugegeben, um Lacklösung 2C mit 5Gew.-% des UV-Absorbers der Biphenyltriazinklasse bezogen auf den experimentell ermittelten Feststoffgehalt von 2A herzustellen.

Folgende Kennwerte wurden für diese drei Lacklösungen erhalten.

**Tabelle 1**

| **Beispiel** | **Feststoffgehalt in Gew-%** | **Viskosität 2 mm Becher** | **Viskosität 4 mm Becher** | **Bemerkungen** |
|---|---|---|---|---|
| 2A | 5,95 % | 106,4 sec. | 15,15 sec. | - |
| 2 B | 5,95 % | 108,8 sec. | 15,16 sec. | + 2 Gew-% CGL 479 |
| 2C | 5,95 % | 110,1 sec. | 15,21 sec. | + 5 Gew% CGL 479 |

Dies zeigt, dass der Zusatz an UV-Absorber die Viskosität nur geringfügig ansteigen lässt, und dass diese modifizierten Lacklösungen nur 1/3 der Viskosität gemessen nach Methode B, im Vergleich zum Originallack (46,25 s) haben.

Diese drei Lacklösungen wurden nun jeweils im Flutverfahren auf Polycarbonatplatten (spritzgegossene Polycarbonat-Platten in optischer Qualität aus Makrolon^{®} 2808 (Bayer MaterialScience AG; mittelviskoses Bisphenol A-Polycarbonat, MFR 10g/10min nach ISO 1133 bei 300°C und 1,2g, ohne UV-Stabilisierung) der Größe 10,5 x 15 x 0,32 cm) aufgebracht, 30min bei RT abgelüftet und 15min bei 115°C gehärtet.

Bei den so erhaltenen geprimerten Platten wurde nach Methode D die Extinktion nur des Primers (unbeschichtetes Makrolon^{®} 2808 als Hintergrundspektrum) bei 340nm in Abhängigkeit von der experimentell bestimmten Lackschichtdicke (Bestimmung nach Methode C) am jeweiligen Messpunkt ermittelt.

**Tabelle 2**

| **Beispiel** | **Zugabe CGL 479** | **Extinktion des Lackes bei 340nm** | | | |
|---|---|---|---|---|---|
| | | **1,0 µm Schicht-dicke** | **1,5 µm Schicht-dicke** | **2,0 µm Schicht-dicke** | **2,5 µm Schicht-dicke** |
| 2A | 0 | 0,60 | 0,95 | 1,20 | 1,60 |
| 2B | 2 Gew-% | 0,82 | 1,16 | 1,44 | 1,75 |
| 2C | 5 Gew-% | 1,17 | 1,60 | 1,95 | 2,30 |

Tabelle 2 zeigt, dass der SHP 470 ohne weitere UV-Licht absorbierende Zusätze (Stammlösung A) bei der Mindestschichtdicke gemäß Spezifikation des Herstellers von 2µm einen Extinktionsbeitrag von 1,2 bei 340nm hat.

Die Mindestschichtdicke wird hier in erster Linie durch den für das Gesamteigenschaftsprofil des Lackes notwendigen Extinktionsbeitrag des Primers gemäß Lambert-Beer'schen Gesetz
E = log I₀/I = εcd mit E: Extinktion;
   I₀, I: Intensität des eingestrahlten bzw. durchgelassenen Lichts;
   ε: molarer Extinktionskoeffizient in 1 mol⁻¹cm⁻¹;
   c: Konzentration in mol l⁻¹;
   d: Filmdicke in cm
bedingt (bei gegebener Konzentration des UV-Absorbers mit bestimmtem Extinktionskoeffizient wird die Extinktion nur noch über die Schichtdicke variiert), da eine haftvermittelnde Wirkung solcher Primersysteme - wie das Beispiel SHP 401 (reiner Haftprimer, ohne nennenswerten UV-Schutzbeitrag) von Momentive Performance Materials mit einem Schichtdickenfenster von 0,5 bis 1,0µm gemäß Spezifikation des Herstellers zeigt - bereits bei deutlich niedrigeren Schichtdicken in analogem Umfang gegeben ist.

Weiterhin zeigt diese Auflistung, dass der Mindestextinktionsbeitrag des puren SHP 470 (Beispiel 2A) für die Gesamteigenschaften des Lackes von 1,2 bei 340nm (also dem Wert bei der Mindestschichtdicke von 2µm (gemäß Spezifikation des Herstellers) bei den mit CGL 479 versetzten Beispiel 2B (2Gew.-% CGL 479) und 2C (5Gew.-% CGL 479) bereits bei 1,5µm bzw.1 µm erreicht wird, und zwar dies ohne die Verarbeitungseigenschaften wie Feststoffgehalt und Viskosität des verdünnten Lackes negativ zu beeinträchtigen.

Durch Herabsetzen der notwendigen Mindestschichtdicke für das Eigenschaftsprofil des Lackes vergrößert sich das Verarbeitungsfenster des SHP 470 bezüglich der Schichtdicke von Verdopplung der Schichtdicke entlang der Flutrichtung (so genannter Schichtdickenkeil) auf der Platte (Anflutbereich ≥2um; Abtropfbereich ≤4um, um innerhalb der Spezifikation zu bleiben). Auf Vervierfachung der Schichtdicke (Anflutbereich ≥1 µm; Abtropfbereich ≤4um) im Fall der Beispiel 2C.

Welche Bedeutung dies bei der Beschichtung größerer Bauteile hat, zeigt die Beschichtung 40 cm langer extrudierter PC-Platten (extrudierte Polycarbonat (PC)-Platten aus Makrolon^{®} 3103 (Bayer MaterialScience AG; hochviskoses Bisphenol A-Polycarbonat, MFR 6,5g/10min nach ISO 1133 bei 300°C und 1,2kr, mit UV-Stabilisierung) der Größe 10 x 40 x 0,4 cm).

**Tabelle 3**

| **Beispiel** | **Schichtdicke in µm in Abhängigkeit von der Position auf der Platte (Abstand in cm von der Anflutkante)** | | | | | | | | | |
|---|---|---|---|---|---|---|---|---|---|---|
| | 3cm | 5cm | 10cm | 15cm | 20cm | 25cm | 30cm | 35cm | 36cm | 37cm |
| **2 A** | 1,3 | 1,5 | 2,1 | 2,9 | 3,0 | 3,2 | 3,2 | 3,4 | 3,4 | 3,5 |
| **2 B** | 1,3 | 1,5 | 2,1 | 2,3 | 2,6 | 2,9 | 3,1 | 3,3 | 3,4 | 3,4 |
| **2 C** | 1,4 | 1,8 | 2,3 | 2,5 | 2,7 | 3,1 | 3,2 | 3,6 | 3,7 | 3,9 |

Mit der hier gewählten erfindungsgemäßen Verdünnung auf einen Feststoffgehalt von etwa 6% wurde eine Schichtdicke von ca. 1,3µm im Anflutbereich und ca. 3,5µm im Abtroptbereich erreicht. Im Beispiel 2A also ohne zusätzlichen UV-Absorber ist aber erst nach 10cm in Flutrichtung auf der Platte eine Schichtdicke erreicht, die die Mindest-UV-Schutzfunktion des Primers gewährleistet. Im Fall der erfindungsgemäßen zusätzlichen Verwendung eines Biphenyltriazinderivats als UV-Absorber ist die Mindest-UV-Schutzfunktion bereits im Anflutbereich erreicht, es kommt also zu keinem frühzeitigen UV-bedingten Ausfall des Lackes im Anflutbereich auch wenn die Mindestdicke gemäß Spezifikation des Original SHP 470 nicht erreicht wird.

### Beispiel 3

Es wurde der kommerziell erhältlichen Dickprimer SHP 470 (Feststoffgehalt 9,90 % & Viskosität 4 mm Becher 46,25 s (Bestimmung siehe Methode A & B)) eingesetzt. Zu 100g der Lösung wurden 65g eines 1-zu-1 Lösemittelgemisches (bezogen auf Gewicht) aus Diacetonalkohol und 1-Methoxy-2-propanol und 0,49 g an CGL 479 zugegeben. Es wurde Lacklösung Beispiel 3A mit 5 Gew.-% CGL 479 bezogen auf den experimentell ermittelten Feststoffgehalt (Bestimmung siehe Methode A) mit 5,95 % erhalten.

Anschliessend werden analog weitere Verdünnungen Beispiel 3B bis 3D hergestellt. Die Einwaagen sind in der nachfolgenden Tabelle 4 aufgeführt:

**Tabelle 4**

| **Beispiel** | **SHP 470 handelsüblich** | **UV - Absorber CGL 479** | **Lösemittel** | **Feststoff Ist** |
|---|---|---|---|---|
| 3 A | 100 g | 0,49 g | 65,00 g | 5,95 % |
| 3B | 100 g | 0,49 g | 98,00 g | 5,08 % |
| 3 C | 100 g | 0,49 g | 147,50 g | 4,12 % |
| 3D | 100 g | 0,49 g | 230,00 g | 3,18 % |

Folgende Kennwerte wurden für diese vier Lacklösungen erhalten:

**Tabelle 5**

| **Beispiel** | **Feststoffgehalt** | **Viskosität 2 mm Becher** | **Viskosität 4 mm Becher** | **Bemerkungen** |
|---|---|---|---|---|
| 3 A | 5,95 % | 106,4 sec. | 15,15 sec. | |
| 3B | 5,08 % | 84,3 sec. | nb | |
| 3C | 4,12% | 69,0 sec. | nb | |
| 3D | 3,18 % | 59,4 sec. | nb | |
| Vergleich 3 E: **SHP 401** (im handelsüblichen Originalzustand | 2,30% | 56,2 sec. | nb | Primer des AS 4000 (von Momentive Performance Materials Inc.) |

Der Ausdruck "nb" steht in der Tabelle für "nicht bestimmt".

Dies zeigt, dass durch die Verdünnung die Viskosität deutlich abgesenkt werden kann, so konnte eine Absenkung der Viskosität um die Hälfte erreicht werden.

Diese vier Lacklösungen wurden nun jeweils im Flutverfahren auf Polycarbonatplatten (extrudierte Polycarbonat (PC)-Platten aus Makrolon^{®} 3103 (Bayer MaterialScience AG; hochviskoses Bisphenol A-Polycarbonat, MFR 6,5g/10min nach ISO 1133 bei 300°C und 1,2kg, mit UV-Stabilisierung) der Größe 10 x 40 x 0,4cm) aufgebracht, 30min bei RT abgelüftet und 15min bei 115°C gehärtet.

Das Flut- und Verarbeitungsverhalten verbesserte sich mit zunehmender Verdünnung. Gleichzeitig sank die Ausbildung von Abtropffäden:

**Tabelle 6**

| **Beispiel** | **Feststoffgehalt in Gew-%** | **Verarbeitungsverhalten** |
|---|---|---|
| 3 A | 5,95 % | Guter Verlauf, deutliche Abtropffädenbildung |
| 3 B | 5,08 % | Guter Verlauf, geringe Abtropffädenbildung |
| 3 C | 4,12 % | Sehr guter Verlauf, kaum Abtropfnasen oder -fäden |
| 3 D | 3,18 % | Sehr guter Verlauf, kaum Abtropfnasen oder -fäden |

An den beschichteten Musterplatten wurde die Schichtdicke nach Methode C ermittelt,

**Tabelle 7**

| **Beispiel** | **Schichtdicken in µm in Abhängigkeit von der Position auf der Platte (Abstand in cm von der Anflutkante)** | | | | | | | | | |
|---|---|---|---|---|---|---|---|---|---|---|
| | 3cm | 5cm | 10cm | 15cm | 20cm | 25cm | 30cm | 35cm | 36cm | 37cm |
| 3A | 1,3 | 1,5 | 2,1 | 2,9 | 3,0 | 3,2 | 3,2 | 3,4 | 3,4 | 3,5 |
| 3B | 0,7 | 1,2 | 1,5 | 2,2 | 2,3 | 2,7 | 2,7 | 2,7 | 2,7 | 2,7 |
| 3C | 0,7 | 0,7 | 1,2 | 1,3 | 1,3 | 1,6 | 1,7 | 1,7 | 1,7 | 1,8 |
| 3D | 0,4 | 0,7 | 1,0 | 1,2 | 1,2 | 1,7 | 1,3 | 1,4 | 1,4 | 1,5 |

### Beispiel 4

Zu jeweils 50g des kommerziell erhältlichen Dickprimer SHP 470 (experimentell bestimmter Feststoffgehalt 8,69% (Bestimmung siehe Methode A)) wurden unter Rühren einmal 86,9 mg CGL 479 (4A mit 2Gew.-% CGL 479)), einmal 217,3mg CGL 479 (4B mit 5 Gew.-% CGL 479) und einmal kein CGL 479 (4C), sowie jeweils 5g Diacetonalkohol (DAA) gegeben.

Diese drei Lacklösungen wurden nun jeweils im Flutverfahren auf Polycarbonatplatten (spritzgegossene PC - Platten in optischer Qualität aus Malaolon® AL2647 (Bayer MaterialScience AG; mittelviskoses Bisphenol A-Polycarbonat mit UV-Stabilisator und Formtrennmittel; MFR 13 g/10min nach ISO1133 bei 300°C und 1,2 kg) der Größe 10,5 x 15 x 0,32 cm aufgebracht, 30 min bei Raumtemperatur abgelüftet und 30 min bei 125°C gehärtet. Diese geprimerten Platten wurden mit AS4700 (UV-absorberhaltiger, polysiloxanbasierter Decklack von Momentive Performance Materials) im Flutverfahren überbeschichtet, 30 min bei Raumtemperatur abgelüftet und 60 min bei 130°C gehärtet.

Die Dicke der so erhaltenen transparenten zweilagigen Beschichtung (Primer 4A, 4B und 4C /Topcoat AS4700) wurde nach Methode C bestimmt. Die Haftung dieser Beschichtung wurde über folgende Tests bestimmt a.) Klebebandabriss (verwendetes Klebeband 3M^{®} 610) ohne und mit Gitterschnitt (analog zu ISO 2409 bzw. ASTM D 3359); b.) Klebebandabriss nach 4 h Lagerung in kochendem Wasser. Die Tests a) und b) wurden bestanden, d.h. es kam zu keinerlei Abriss der Beschichtung (Bewertung 0 gemäß ISO 2409 bzw. 5B gemäß ASTM D 3359). Weiterhin wurden diese Platten einem beschleunigten Bewitterungstest in einem Atlas Ci 5000 Weatherometer mit einer Bestrahlungsstärke von 0,75 W/m²/nm bei 340 nm und einem Trocken-/Beregnungszyklus von 102:18 Minuten unterzogen (im folgenden Xenon WOM 0,75 genannt), wobei nach unterschiedlichen Bewitterungszeiten folgende Gelbwerte (Bestimmung Yellowness-Index mit dem Ultrascan XE^{®} der Firma Hunter nach ASTM E 313) bzw. Haze-Werte (Bestimmung Haze-Werte mit dem Hazegard^{®} der Firma Byk Gardner nach ASTM D 1003) bestimmt wurden.

Der Yellowness-Index (Spalten 2,3 und 4 in Tabelle 8) nach unterschiedlichen Bewitterungszeiten (in Stunden (Spalte 1 in Tabelle 8)) Xenon-WOM 0.75 ist in der folgenden Tabelle 8 aufgeführt:

**Tabelle 8**

| Beschichtung | 4A / AS 4700 | 4B / AS4700 | 4C / AS4700 |
|---|---|---|---|
| **zusätzlicher UV-Absorber im Primer** | **mit 2Gew.-% CGL 479** | **mit 5 Gew.-% CGL 479** | **ohne CGL 479** |
| **Schichtdicke (Primer/Topcoat)** | **1,4µm/3,8µm** | **1,6µm/3,6µm** | **1,4µm/3.8µm** |
| 0 | 1,04 | 1,03 | 0,98 |
| 987 | 1,05 | 1,00 | 1,11 |
| 2000 | 1,50 | 1,43 | 1,53 |
| 2553 | 1,73 | 1,62 | 1,80 |
| 3000 | 1,89 | 1,81 | 2,09 |
| 4055 | 2,58 | 2,50 | 3,42^{(*)} |
| 4994 | 3,28 | 2,97 | 4,96 |
| 6000 | 4,67^{(*)} | 3,77^{(*)} | 9,42 |
| 7055 | 6,11 | 5,41 | 11,93 |
| 8000 | 8,28 | 6,98 | 13,69 |

Hierbei und in Tabelle 9 steht der hochgestellte Asterisk ^{(*)} für erste witterungsbedingte Defekte wie beginnende Delamination oder Rissbildung.

Die Haze - Werte in % (Spalten 2,3 und 4 in Tabelle 9) nach unterschiedlichen Bewitterungszeiten (in Stunden (Spalte 1 in Tabelle 9)) Xenon WOM 0.75 sind in folgender Tabelle 9 aufgeführt.

**Tabelle 9**

| Beschichtung | 4A / AS 4700 | 4B/ AS4700 | 4C / AS4700 |
|---|---|---|---|
| **zusätzlicher UV-Absorber im Primer** | **mit 2Gew.-% CGL 479** | **mit 5Gew.-% CGL 479** | **ohne CGL 479** |
| **Schichtdicke Primer/Topcoat** | **1,4µm/3.8µm** | **1,16µm/3,6µm** | **1,4µm13,8µm** |
| 0 | 0,4 % | 0,4 % | 0,4 % |
| 987 | 0,6% | 0,7 % | 0,6 % |
| 2000 | 0,7 % | 0,7 % | 0,7 % |
| 2553 | 1,0 % | 0,8 % | 0,8 % |
| 3000 | 0,9 % | 0,9 % | 0,9 % |
| 4055 | 1,0% | 1,0% | 1,3%^{(*)} |
| 4994 | 1,15 % | 1,14 % | 1,91 % |
| 6000 | 1,5 % ^{(*)} | 1,4%^{(*)} | 2,4 % |
| 7055 | 2,4 % | 2,4 % | 6,1 % |
| 8000 | 4,6% | 3,9 % | 19,2 % |

Dieser Bewitterungsvergleich zeigt, dass die erfindungsgemäßen Lackprimerformulierungen (4A und 4B) nicht nur bei niedrigerer Schichtdicke eine höhere Extinktion und damit die gleiche UV-Schutzfunktion wie der Originalprimer bei schwieriger einzustellender höherer Schichtdicke hat (oder umgekehrt bei gleicher Schichtdicke einen höheren UV-Schutz bietet (zu erkennen an dem geringeren YI Anstieg mit der Bewitterungszeit für 4A und 4B verglichen mit 4C), sondern dass auch die anderen typischen Ausfallkriterien bei der Bewitterung beschichteter PC Teile, wie Trübung, Delamination und Rissbildung deutlich später auftreten (bei gleicher Schichtdicke).

## Patentansprüche

1. Zusammensetzung enthaltend
a) 100.000 Gewichtsteilen einer Primerzusammensetzung, geeignet als Haftvermittler zwischen einem thermoplastischen Substrat und einem siloxanbasierten Decklack und enthaltend (a1) Bindermaterial, Lösemittel (a2), und Dibenzoylresorcin als UV-Absorber (a3);
b) 0 bis 900.000 Gewichtsteile eines Lösemittels, und
c) 1 bis 3.000 Gewichtsteile einer Verbindung der Formel (I): 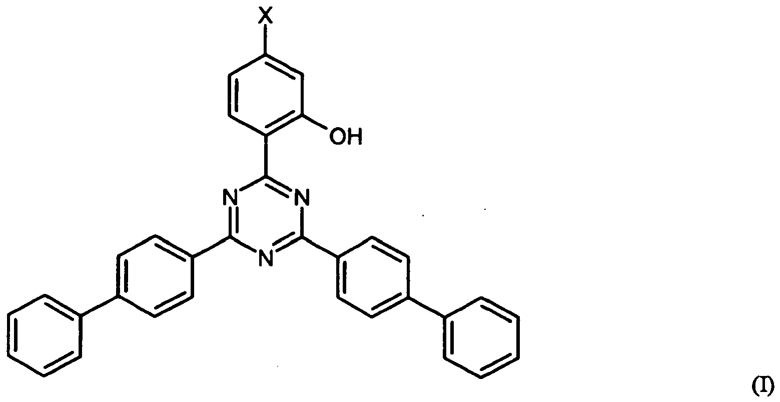
wobei X = OR⁶, OCH₂CH₂OR⁶, OCH₂CH(OH)CH₂OR⁶ oder OCH(R⁷)COOR⁸, worin
R⁶ = verzweigtes oder unverzweigtes C₁-C₁₃-Alkyl, C₂-C₂₀-Alkenyl, C₆-C₁₂-Aryl oder -CO-C₁-C₁₈-Alkyl,
R⁷ = H oder verzweigtes oder unverzweigtes C₁-C₈-Alkyl, und
R⁸ = C₁-C₁₂-Alkyl; C₂-C₁₂-Akenyl oder C₅-C₆-Cycloalkyl sind,
wobei die Zusammensetzung eine Viskosität von 40sec bis 140sec gemessen nach DIN EN ISO 2431 bei 23°C und einem Auslaufbecher mit einer Düse, die einen Durchmesser von 2 mm aufweist, hat.

2. Die Zusammensetzung nach Anspruch 1, enthaltend
a) 100.000 Gewichtsteile einer Primerzusammensetzung,
b) 11.111 bis 400.000 Gewichtsteile eines Lösemittels, und
c) 10 bis 1.500 Gewichtsteile einer Verbindung der Formel (I).

3. Die Zusammensetzung nach Anspruch 1, wobei das Bindermaterial (a1) ein Polyacrylat enthält.

4. Die Zusammensetzung nach Anspruch 1, enthaltend 2-[2-Hydroxy-4-[(octyloxycarbonyl)ethylidenoxy]phenyl-4,6-di(4-phenyl)phenyl-1,3,5-triazin als Verbindung der Formel (I).

5. Die Zusammensetzung nach Anspruch 1, wobei die Primerzusammensetzung a1) Polymethylmethacrylat, a2) 1-Methoxy-2-propanol und Diacetonalkohol und a3) Dibenzoylresorcin und eine Viskosität von > 90 sec gemessen nach DIN EN ISO 2431 bei 23°C und einem 2mm Becher hat.

6. Die Zusammensetzung nach Anspruch 1, wobei das Lösemittel b) Diacetonalkohol (CH₃)₂C(OH)CH₂C(=O)CH₃, Essigsäureethylester, Methoxypropanol und/oder Butanon ist.

7. Ein Verfahren zur Herstellung der Zusammensetzung nach Anspruch 1, umfassend die Schritte i) Vermischen einer Primerzusammensetzung a) enthaltend a1) Polymethylmethacrylat a2) 1-Methoxy-2-propanol und Diacetonalkohol a3) Dibenzoylresorcin, wobei die Primerzusammensetzung eine Viskosität von > 90 sec gemessen nach DIN EN ISO 2431 bei 23°C und einem 2mm Becher hat mit einem Lösemittel b), bis ein Feststoffgehalt von ca. 2 bis 9,5 Gew.-%, bevorzugt 2,5 bis 9 Gew.-% resultiert; ii) Vermischen der aus Schritt i) erhaltenen Mischung mit 0,01 bis 15 Gew.-%, bevorzugt 0,1% bis 10 Gew.-%, besonders bevorzugt 1% bis 7 Gew.-% c) einer Verbindung der Formel (I); und iii) homogenisieren der aus Schritt ii) erhaltenen Mischung.

8. Ein Verfahren zur Herstellung eines mehrschichtigen Erzeugnisses, umfassend die Schritte
(i) Auftragen der Zusammensetzung nach Anspruch 1 auf eine erste Schicht aus thermoplastischen Polymer unter Bildung einer zweiten Schicht;
(ii) Härten der Zusammensetzung.

9. Das Verfahren nach Anspruch 8, weiter umfassend die Schritte
(iii) Auftragen einer Decklackformulierung auf die Oberfläche der zweiten Schicht; und
(iv) Härten der Decklackformulierung.

10. Verwendung der Zusammensetzung nach Anspruch 1 zur Beschichtung von Oberflächen.

11. Schichtaufbau, umfassend:
i) ein thermoplastisches Substrat, mit einer darauf befindlichen
ii) Primerschicht,
**dadurch gekennzeichnet, dass** die Primerschicht durch Härtung der Zusammensetzung gemäß Anspruch 1 erhalten wird.

12. Schichtaufbau nach Anspruch 11,
**dadurch gekennzeichnet, dass** die Primerschicht zusätzlich zu mindestens einer Verbindung der Formel I mindestens eine Verbindung der Formeln (IIa und/oder IIb) enthält: 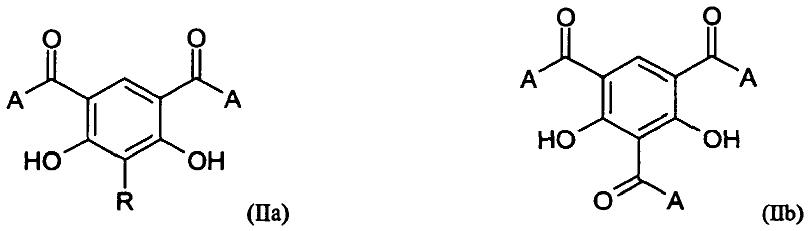 worin jedes A unabhängig ein substituierter oder unsubstituierter monocyclischer oder polycyclischer aromatischer Rest ist und der substitutierte monocyclische oder polycyclische aromatische Rest Substituenten hat, die ausgewählt sind aus der Gruppe bestehend aus Wasserstoff, Halogenen, Alkoxygruppen, C₁₋₈ Alkylgruppen und Hydroxygruppen und R Wasserstoff oder eine lineare oder verzweigte aliphatische Kette mit weniger als 10 Kohlenstoffatomen ist.

13. Schichtaufbau nach Anspruch 12, worin die Verbindung der Formeln (IIa und/oder IIb) ausgewählt wird aus der Gruppe bestehend aus 4,6-Dibenzoylresorcin, 4,6-Di-(4'-tert.-butylbenzoyl)resorcin, 4,6-Dibenzoyl-2-propylresorcin, 4,6-Dibenzoyl-2-(3-Triethoxysilylpropyl)resorcin oder 2,4,6-Tribenzoylresorcin.

14. Schichtaufbau nach einem der Ansprüche 11 bis 13, worin die Primerschicht mindestens ein Polyacrylat und das thermoplastische Substrat Polycarbonat enthält.

## Claims

1. Composition comprising
a) 100 000 parts by weight of a primer composition suitable as a promoter of adhesion between a thermoplastic substrate and a siloxane-based topcoat and comprising (a1) binder material, solvent (a2), and dibenzoylresorcinol as UV absorber (a3);
b) 0 to 900 000 parts by weight of a solvent, and
c) 1 to 3000 parts by weight of a compound of the formula (I) : 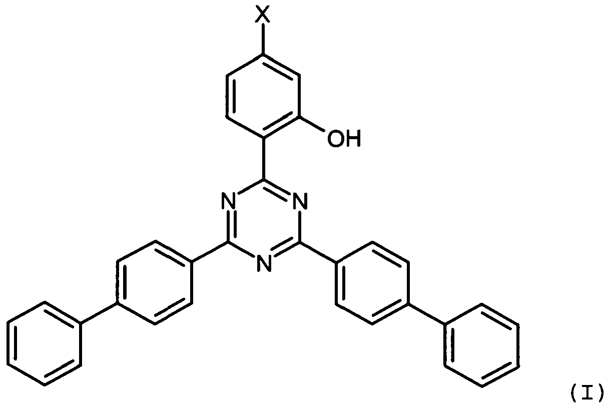
where X = OR⁶, OCH₂CH₂OR⁶, OCH₂CH(OH)CH₂OR⁶ or OCH (R⁷) COOR⁸, in which
R⁶ = branched or unbranched C₁-C₁₃-alkyl , C₂-C₂₀-alkenyl, C₆-C₁₂-aryl or -CO-C₁-C₁₈-alkyl,
R⁷ = H or branched or unbranched C₁-C₈-alkyl, and
R⁸ = C₁-C₁₂-alkyl; C₂-C₁₂-alkenyl or C₅-C₆-cycloalkyl,
the composition having a viscosity of 40 sec to 140 sec as measured in accordance with DIN EN ISO 2431 at 23°C with a flow cup having a nozzle with a diameter of 2 mm.

2. The composition according to Claim 1, comprising
a) 100 000 parts by weight of a primer composition,
b) 11 111 to 400 000 parts by weight of a solvent, and
c) 10 to 1500 parts by weight of a compound of the formula (I).

3. The composition according to Claim 1, wherein the binder material (a1) comprises a polyacrylate.

4. The composition according to Claim 1, comprising 2-[2-hydroxy-4-[(octyloxycarbonyl)ethylideneoxy]phenyl-4,6-di(4-phenyl)phenyl-1,3,5-triazine as compound of the formula (I).

5. The composition according to Claim 1, the primer composition having a1) polymethyl methacrylate, a2) 1-methoxy-2-propanol and diacetone alcohol, and a3) dibenzoylresorcinol, and a viscosity of > 90 sec as measured in accordance with DIN EN ISO 2431 at 23°C with a 2 mm cup.

6. The composition according to Claim 1, wherein the solvent b) is diacetone alcohol (CH₃) ₂C (OH) CH₂C (=O) CH₃, ethyl acetate, methoxypropanol and/or butanone.

7. A process for preparing the composition according to Claim 1, comprising the steps of i) mixing a primer composition a) comprising a1) polymethyl methacrylate, a2) 1-methoxy-2-propanol and diacetone alcohol, and a3) dibenzoylresorcinol, the primer composition having a viscosity of > 90 sec as measured in accordance with DIN EN ISO 2431 at 23°C with a 2 mm cup, with a solvent b), to give a solids content of about 2% to 9.5% by weight, preferably 2.5% to 9% by weight; ii) mixing the mixture obtained from step i) with 0.01% to 15% by weight, preferably 0.1% to 10% by weight, more preferably 1% to 7% by weight, of c) a compound of the formula (I); and iii) homogenizing the mixture obtained from step ii).

8. A process for producing a multilayer product, comprising the steps of
(i) applying the composition according to Claim 1 to a first layer of thermoplastic polymer, to form a second layer;
(ii) curing the composition.

9. The process according to Claim 8, further comprising the steps of
(iii) applying a topcoat formulation to the surface of the second layer; and
(iv) curing the topcoat formulation.

10. Use of the composition according to Claim 1 to coat surfaces.

11. Layer construction comprising:
iii) a thermoplastic substrate with, located thereon,
iv) a primer layer,
**characterized in that** the primer layer is obtained by curing the composition according to Claim 1.

12. Layer construction according to Claim 11, **characterized in that** the primer layer in addition to at least one compound of the formula I comprises at least one compound of the formulae (IIa and/or IIb): 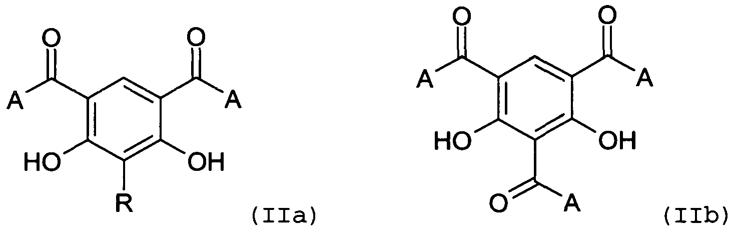 in which each A independently is a substituted or unsubstituted monocyclic or polycyclic aromatic radical and the substituted monocyclic or polycyclic aromatic radical has substituents which are selected from the group consisting of hydrogen, halogens, alkoxy groups, C₁₋₈ alkyl groups, and hydroxyl gorups, and R is hydrogen or a linear or branched aliphatic chain having less than 10 carbon atoms.

13. Layer construction according to Claim 12, wherein the compound of the formulae (IIa and/or IIb) is selected from the group consisting of 4,6-dibenzoylresorcinol, 4,6-di(4'-tert-butylbenzoyl)resorcinol, 4,6-dibenzoyl-2-propylresorcinol, 4,6-dibenzoyl-2-(3-triethoxysilylpropyl)resorcinol or 2,4,6-tribenzoylresorcinol.

14. Layer construction according to any of claims 11 to 13, wherein the primer layer comprises at least one polyacrylate and the thermoplastic substrate comprises polycarbonate.

## Revendications

1. Composition contenant
a) 100 000 parties en poids d'une composition d'apprêt, appropriée comme promoteur d'adhérence entre un substrat thermoplastique et une laque de recouvrement à base de siloxane et contenant (a1) un matériau liant, un solvant (a2) et du dibenzoylrésorcinol comme absorbant des UV (a3) ;
b) 0 à 900 000 parties en poids d'un solvant, et
c) 1 à 3000 parties en poids d'un composé de formule (I) : 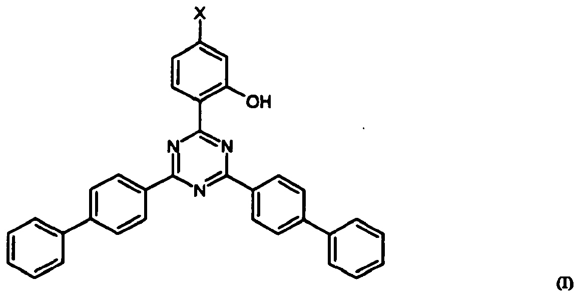
X = OR⁶, OCH₂CH₂OR⁶, OCH₂CH (OH) CH₂OR⁶ ou OCH (R⁷) COOR⁸, où
R⁶ = C₁-C₁₃-alkyle, C₂-C₂₀-alcényle, C₆-C₁₂-aryle ou -CO-C₁-C₁₈-alkyle ramifié ou non ramifié,
R⁷ = H ou C₁-C₈-alkyle ramifié ou non ramifié, et
R⁸ = C₁-C₁₂-alkyle, C₂-C₁₂-alcényle ou C₅-C₆-cycloalkyle, la composition présentant une viscosité de 40 sec à 140 sec, mesurée selon la norme DIN EN ISO 2431 à 23°C et avec un godet d'écoulement présentant un orifice de sortie qui présente un diamètre de 2 mm.

2. Composition selon la revendication 1, contenant
a) 100 000 parties en poids d'une composition d'apprêt,
b) 11 111 à 400 000 parties en poids d'un solvant, et
c) 10 à 1500 parties en poids d'un composé de formule (I) .

3. Composition selon la revendication 1, le matériau liant (a1) contenant un polyacrylate.

4. Composition selon la revendication 1, contenant de la 2-[2-hydroxy-4-[(octyloxycarbonyl)éthylidèneoxy]phényl-4,6-di (4-phényl)phényl-1,3,5-triazine comme composé de formule (I).

5. Composition selon la revendication 1, la composition d'apprêt contenant a1) du poly(méthacrylate de méthyle), a2) du 1-méthoxy-2-propanol et de l'alcool diacétonique et a3) du dibenzoylrésorcinol et présentant une viscosité > 90 sec, mesurée selon la norme DIN EN ISO 2431 à 23°C et avec un godet de 2 mm.

6. Composition selon la revendication 1, le solvant b) étant de l'alcool diacétonique (CH₃)₂C(OH)CH₂C(=O)CH₃, de l'ester éthylique de l'acide acétique, du méthoxypropanol et/ou de la butanone.

7. Procédé pour la préparation de la composition selon la revendication 1, comprenant les étapes i) mélange d'une composition d'apprêt a) contenant a1) du poly(méthacrylate de méthyle), a2) du 1-méthoxy-2-propanol et de l'alcool diacétonique, a3) du dibenzoylrésorcinol, la composition d'apprêt présentant une viscosité > 90 sec, mesurée selon la norme DIN EN ISO 2431 à 23°C et avec un godet de 2 mm, avec un solvant b), jusqu'à l'obtention d'une teneur en solides d'environ 2 à 9,5% en poids, de préférence de 2,5 à 9% en poids ; ii) mélange du mélange obtenu dans l'étape i) avec 0,01 à 15% en poids, de préférence 0,1% à 10% en poids, de manière particulièrement préférée 1% à 7% en poids de c) un composé de formule (I) ; et iii) homogénéisation du mélange obtenu dans l'étape ii).

8. Procédé pour la préparation d'un produit à plusieurs couches, comprenant les étapes
(i) application de la composition selon la revendication 1 sur une première couche en polymère thermoplastique en formant une deuxième couche ;
(ii) durcissement de la composition.

9. Procédé selon la revendication 8, comprenant en outre les étapes
(iii) application d'une formulation de laque de recouvrement sur la surface de la deuxième couche ; et
(iv) durcissement de la formulation de laque de recouvrement.

10. Utilisation de la composition selon la revendication 1 pour le recouvrement de surfaces.

11. Structure à couches, comprenant
iii) un substrat thermoplastique, sur laquelle se trouve
iv) une couche d'apprêt
**caractérisée en ce que** la couche d'apprêt est obtenue par le durcissement de la composition selon la revendication 1.

12. Structure à couches selon la revendication 11, **caractérisée en ce que** la couche d'apprêt contient en plus d'au moins un composé de formule I au moins un composé des formules (IIa) et/ou (IIb) : 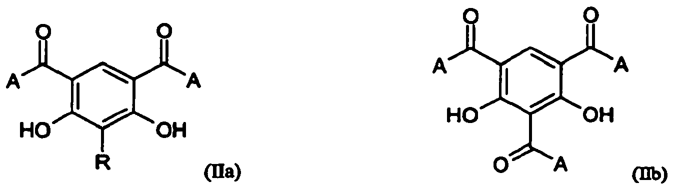 chaque A représentant, indépendamment, un radical aromatique monocyclique ou polycyclique, substitué ou non substitué et le radical aromatique monocyclique ou polycyclique substitué présentant des substituants, qui sont choisis dans le groupe constitué par l'hydrogène, les halogènes, les groupes alcoxy, les groupes C₁₋₈-alkyle et les groupes hydroxy et R représentant hydrogène ou une chaîne aliphatique linéaire ou ramifiée comprenant moins de 10 atomes de carbone.

13. Structure à couches selon la revendication 12, le composé des formules (IIa) et/ou (IIb) étant choisi dans le groupe formé par le 4,6-dibenzoylrésorcinol, le 4,6-di-(4'-tert-butylbenzoyl)résorcinol, le 4,6-dibenzoyl-2-propylrésorcinol, le 4,6-dibenzoyl-2-(3-triéthoxysilylpropyl)résorcinol ou le 2,4,6-tribenzoylrésorcinol.

14. Structure à couches selon l'une quelconque des revendications 11 à 13, la couche d'apprêt contenant au moins un polyacrylate et le substrat thermoplastique contenant du polycarbonate.
